# EUROPEAN PATENT APPLICATION

(11) **EP 0 889 418 A2**
(43) Date of publication of application: **07.01.1999**
(21) Application number: 98111788.0
(22) Date of filing: 26.06.1998
(51) Int. Cl.: G06F 17/30

(54) **Abstract URL resolution via relocation service**

(30) Priority: 30.06.1997 US 885455
(71) Applicant: SUN MICROSYSTEMS, INC., Mountain View, California 94043-1100 (US)
(72) Inventor: Densmore, Owen, Palo Alto, California 94303 (US); Gramlich, Wayne, Sunnyvale, California 94086 (US)
(74) Representative: Kahler, Kurt, Dipl.-Ing.

(57) **Abstract**

A web page server that provides URL abstraction and dynamic URL resolution. The web page server receives HTTP requests from client systems. For requests that include abstract URLs, the web page server resolves the abstract URL to a resolved URL. This resolution of abstract URLs to resolved URLs is based on the identity of the client system sending the HTTP request. After resolving an abstract URL to a resolved URL, the web page server sends an HTTP redirection response to the requesting client system. The redirection response causes the requesting system to repeat the HTTP request using the resolved URL in place of the abstract URL. In this way, abstract URLs can be resolved to resolved URLs based on the identity of requesting client systems.

## Description

### FIELD OF THE INVENTION

An embodiment of the present invention relates generally to a method for identifying objects in computer networks. More specifically, an embodiment of the present invention relates to a system for providing abstract uniform resource locators that resolve to specific resources based on the identity of the requesting client.

### BACKGROUND OF THE INVENTION

Universal Resource Locators (URLs) are a mechanism for identifying resources within computer networks. Structurally, a URL is a string composed of a set of fields. The first field is the name of the network protocol that is used to obtain the resource identified by the URL (e.g., http://). The next field is the hostname of the computer system on which the resource identified by the URL is located. The hostname is followed, optionally, by a directory name and a filename. An example of a URL is: http://www.wine.org/varietals/zinfandel.html.

In general, URLs have proven to be an effective part of many computer networks. This is especially true within the World Wide Web, where the use of URLs is pervasive. Unfortunately, there are useful networking concepts that are not easily expressed using the basic URL mechanism. In these cases, the result is unnecessary complication of network design and implementation. For example, in a large corporation, it would be advantageous to assign a single URL to a given service. Thus, a single URL might be assigned to the corporation's internal travel agency. All of the employees within the corporation can then be instructed to access the given service using the single URL. Of course, in a large corporation, there may be a number of different internal travel agencies, one for each of the corporation's many divisions. What is needed is an abstract URL that resolves, dynamically, to the URL of the appropriate travel agency (i.e., when accessed within a particular division, the abstract URL would resolve to the URL of that division's travel agency). Unfortunately, the traditional URL mechanism provides no method for URL abstraction. As a result, the exemplary corporation must assign individual URLs to each of the corporation's travel agencies. The corporation's employees must be separately instructed to access the correct URL. Based on the foregoing example, it may be appreciated that there is a need for a method of URL abstraction and dynamic URL resolution.

### SUMMARY OF THE INVENTION

An embodiment of the present invention includes a web page server that provides URL abstraction and dynamic URL resolution. Client processes send requests to the web page server using the hypertext transfer protocol (HTTP). Each HTTP request includes a URL. In the described embodiment, each URL is either absolute or abstract. An absolute URL included in an HTTP request identifies the web page, or other object, that is the subject of the request. When an HTTP request including an absolute URL is received, the web page server processes the desired request. The web page server then sends an HTTP response to the requesting client program. Thus, absolute URLs are processed using standard methods available within prior art web page servers.

When an HTTP request including an abstract URL is received, the web page server foregoes the processing performed for requests including absolute URLs. Instead, the web page server maps the abstract URL to a resolved URL. Preferably, the web page server performs this mapping by selecting the resolved URL from a resolved URL table. The web page server selects a URL from the table based on information that fully or partially identifies the client system from which the HTTP request was received. The exact identifying information used may vary between implementations. Typical examples include the IP address of the requesting client and the subnet address of the requesting client.

Using the resolved URL selected from the table, the web server constructs an HTTP redirection response. The HTTP redirection response includes the resolved URL and enables the requesting client to access to the desired page or object at the resolved URL. In this way, an embodiment of the present invention provides a method that allows abstract URLs to be resolved to absolute URLs based on the identify of requesting client systems.

In accordance with the purpose of the invention, as embodied and broadly described herein, an embodiment of the present invention includes a method for resolving an abstract resource address, the method comprising the steps, performed by a computer system, of: receiving an HTTP request from a client system, the HTTP request including an abstract resource address, resolving the abstract resource address to a resolved resource address, and sending an HTTP redirection response including the resolved resource address to the client system.

In further accordance with the purpose of the invention, as embodied and broadly described herein, an embodiment of the present invention includes An apparatus for resolving an abstract resource address comprising: a first portion configured to receive an HTTP request from a client system, the HTTP request including an abstract resource address, a second portion configured to resolve the abstract resource address to a resolved resource address, and a third portion configured to send an HTTP redirection response including the resolved resource address to the client system.

Advantages of the invention will be set forth, in part, in the description that follows and, in part, will be understood by those skilled in the art from the description or may be learned by practice of the invention. The advantages of the invention will be realized and attained by using the elements and combinations particularly pointed out in the appended claims and equivalents.

### BRIEF DESCRIPTION OF THE DRAWINGS

The accompanying drawings, that are incorporated in and constitute a part of this specification, illustrate several embodiments of the invention and, together with the description, serve to explain the principles of the invention.
Figure 1 is a block diagram of a host computer system in accordance with an embodiment of the present invention.
Figure 2 is a block diagram showing an embodiment of the web page server of the present invention in combination with other web page servers and a representative client process.
Figure 3 is a flowchart showing the steps performed during processing of an HTTP request by an embodiment of the web page server of the present invention.

### DETAILED DESCRIPTION OF THE PREFERRED EMBODIMENTS

Reference will now be made in detail to preferred embodiments of the invention, examples of which are illustrated in the accompanying drawings. Wherever possible, the same reference numbers will be used throughout the drawings to refer to the same or like parts.

### 1. ENVIRONMENT

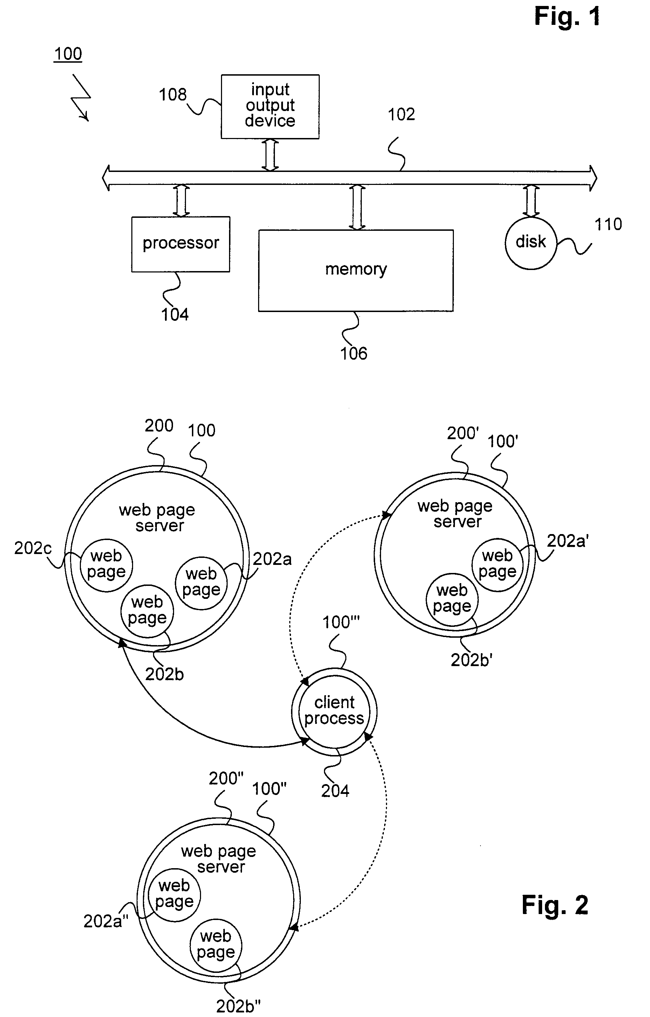

In Figure 1, a host computer system 100 is shown as a representative environment for an embodiment of the present invention. Structurally, host computer system 100 includes a bus 102 connecting a processor, or processors 104, and a memory 106. An input/output device 108 is also connected to bus 102. Input/output device 108 represents a wide range of varying I/O devices such as disk drives, keyboards, modems, network adapters, printers and displays. Host computer system 100 also includes a disk drive 110 of any suitable disk drive type (equivalently, disk drive 110 may be any non-volatile storage system such as "flash" memory). In general, it may be appreciated that host computer system 100 is intended to be representative of general purpose computers. As a general purpose computer, host computer system 100 is useable alone or in combination with other computer systems within computer networks.

### 2. WEB PAGE SERVER

As shown in Figure 2, an embodiment of the present invention includes a web page server 200. Web page server 200 is a computer process that is shown to be resident within a host computer system 100. Web page server 200 provides access to a number of web pages, of which web page 202a through 202c are representative.

As may be appreciated, web page servers, including web page server 200, are typically deployed in environments that include a number of other web page servers. For generality, Figure 2 includes a second web page server 200' and a third web page server 200''. Web page servers 200' and 200'' are computer processes that are shown to be resident within host computer systems 100' and 100'', respectively.

Client process 204 interacts with web page servers 200 to access web pages 202. Client process 204 is typically an Internet browser, such as Netscape Navigator, or Microsoft Explorer. Netscape Navigator is a registered trademark of Netscape Communications Systems, Inc. Client process 204 may also be a wide range of other processes, such as web searching engines. Client process 204 is shown to be resident within a host computer system 100'''. In Figure 2, client process 204 and web page servers 200 are shown to be resident within individual host computer systems 100. It may be appreciated, however, that these processes may co-reside on a smaller number of host computer systems 100. In fact, client process 204 and web page servers 200 may co-reside on a single host computer system 100.

Each web page 202 included in web page server 200 has an associated URL. The URL associated with a web page 202 is an address or handle that may be used to access a web page 202. For the purposes of illustration, the following table lists the URL associated with each web page 202 of Figure 2.

| Web page | URL |
|---|---|
| 202a | http://Sun.com/products.html |
| 202b | http://Sun.com/support.html |
| 202c | http://Sun.com/employment.html |
| 202a' | http://CorpWeb1.eng/travel.html |
| 202b' | http://CorpWeb1.eng/news.html |
| 202a'' | http://CorpWeb2.adm/travel.html |
| 202b'' | http://CorpWeb2.adm/ news.html |

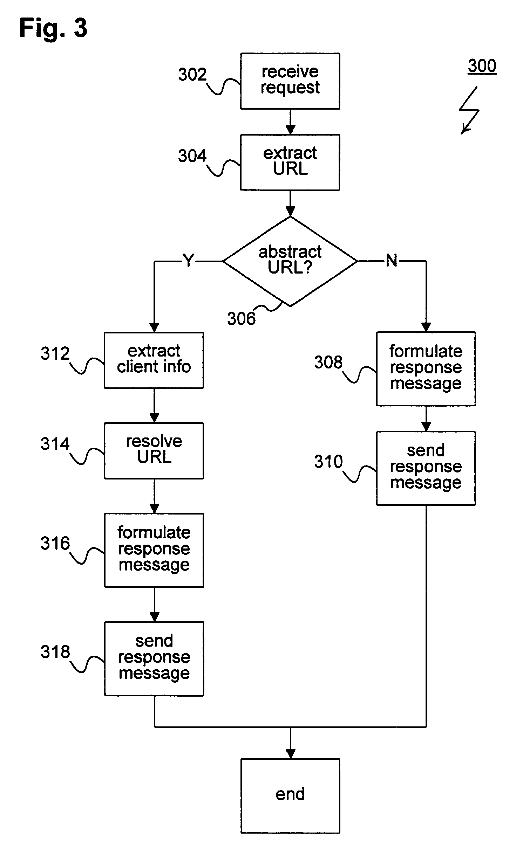

In Figure 3, a method for providing access to web pages 202 is shown and generally designated 300. Method 300 begins with step 302 where web page server 200 receives an HTTP ("Hypertext Transfer Protocol") request message from client process 204. The received HTTP request message includes the URL that is associated with a web page 202 that client process 204 desires to access.

In step 304, web page server 200 extracts the URL included in the received message. This URL is conveniently referred to as the received URL. The received URL may be either abstract or absolute. If the received URL is abstract, it is not directly associated with a web page 202. Instead, the received URL is associated with another URL, conveniently referred to as a resolved URL. In step 306, web page server 200 tests the received URL to determine if it is abstract or absolute.

In general, a number of mechanisms may be used to distinguish between abstract and absolute URLs. One method is to require that abstract URLs include a special prefix. This prefix may be included within the protocol field included within abstract URLs. For example, abstract URLs may be required to begin with the protocol "httpabs" (in place of the generally used "http:"). The prefix would then inform web page server 200 that an abstract URL had been received.

Another method is to require that abstract URLs include a special suffix. This suffix may be included in the query string of abstract URLs (the query string is the part of a URL that follows the question mark). The suffix may also be included as part of the URL path of abstract URLs. The suffix would then inform web page server 200 that an abstract URL had been received.

A third method is to bind abstract URLs to an HTML page that includes an HTML meta-tag. The meta-tag would be of the form: 〈META HTTP-EQUIV="Location" CONTENT="XXX"〉 The meta-tag would then inform web page server 200 that an abstract URL had been received.

A fourth method is to have web page server 200 compare the received URL with a list of abstract URLs available within web page server 200. If the received URL is included in the list of abstract URLs, web page server 200 determines that the received URL is abstract and not absolute. It should be noted that the list of abstract URLs need not be stored within web page server 200. Instead, this list may be included in a networked database. Alternately, a resolver process may exist within host computer system 100 or a network including host computer system 100 to determine if URLs are abstract or absolute.

In the case that the received URL is absolute, execution of method 300 continues at step 308. In step 308, web page server 200 constructs an HTTP response message that corresponds to the HTTP request message received from client process 204 in step 302. If web page server 200 encounters no errors during the processing of the received HTTP request, the response message will provide access to the web page 202 requested by client process 204. Alternatively, if errors are encountered, a HTTP error response is generated. The latter case occurs, for example, when the received URL corresponds to a non-existent web page 202. In step 310, web page server 200 sends the response message formulated in step 308 to client process 204.

If web page server 200 determines, in step 306, that the received URL is abstract, execution of method 300 continues at step 312. In step 312, web page server 200 extracts client-specific information from the HTTP request message received in step 302. The type of client-specific information extracted in step 312 is implementation dependent. Examples include the IP address of host computer system 100''', the subnet address of host computer system 100''' or the IP address of a caching server that exists between client process 204 and web page server 200 (caching server not shown). It should be noted that the various types of information that are extracted in step 312 may be more, or less, specific to client process 204. Thus, the IP address of host computer system 100''' is highly specific while the subnet address of host computer system 100''' is less specific.

In step 314, web page server 200 translates the received URL to a resolved URL. More specifically, abstract URLs are associated with resolved URLs. This correspondence is typically not one-to-one. Thus, a particular abstract URL is associated with a group of resolved URLs. To resolve a particular abstract URL, a resolved URL must be selected from this group of resolved URL. This selection is based on the client-specific information extracted in step 312. As an example, it may be assumed that the abstract URL http://Sun.com/travel.html is associated with the resolved URL http://CorpWeb1.eng/travel.html and the resolved URL http://CorpWeb2.adm/travel.html. When web page server 200 receives the abstract URL http://Sun.com/travel.html, web page server 200 must select between the two associated resolved URLs. As discussed, this selection is performed using the client-specific information extracted in step 312. For example, a large corporation may maintain an engineering network and an administration network. Host computer systems 100 included in these networks may be classified as engineering systems or administration systems. In step 314, the web page server 200 may use this distinction to select http://CorpWeb1.eng/travel.html (presumably, a web page designed to suit the engineering portion of the company) for host computer systems 100 included in the engineering network. Similarly, web page server 200 may select http://CorpWeb2.adm/travel.html (presumably, a web page designed to suit the administration portion of the company) for host computer systems 100 included in the administration network. Step 312 determines whether the client process 204 is in the engineering network or administrative network by examining the IP address or subnet address of the host computer system 100'''.

Method 300 is presented as a generalized method for the resolution of abstract URLs to resolved URLs. In some environments, it is possible to configure web page server 200 to automatically invoke an internal procedure or program when an abstract URL is received. This procedure or program is bound to the abstract URL. For example, in some environments, it is possible to configure web page server 200 to invoke a servlet when an abstract URL is received. Automatic invocation of the servlet avoids steps 306, 308 and 310 of method 300. Instead, web page server 200 proceeds directly from receiving the request and extracting the received URL (steps 302 and 304) to resolving the received URL and sending the response (steps 312 through 318).

The preceding paragraphs have described the resolution of abstract URLs to resolved URLs. It should be noted, however, that a resolved URL may be absolute or abstract. Thus, an embodiment of the present invention may be used to provide an arbitrary degree of abstraction between abstract URLs and absolute URLs.

Within web page server 200, resolution of abstract URLs to resolved URLs may be performed by a wide range of differing techniques. For example, this resolution may be accomplished by a series of conditional statements that map abstract URLs to resolved URLs. Alternatively, a web page server 200 may include a matrix that maps abstract URLs to resolved URLs. Web server page server 200 may also include a series of tables, one for each abstract URL. The table corresponding to an abstract URL may then be searched to locate an entry that corresponds to the client-specific information obtained in step 312. Finally, it may be preferable to include URL resolution as a network resolver process that is accessed by web page server 200.

In step 316, web page server 200 constructs an HTTP redirection message that includes the resolved URL formulated in step 314. More specifically, if the abstract URL http://Sun.com/travel.html has been resolved to the resolved URL http://CorpWeb1.eng/travel.html, web page server 200 constructs a response of the form:
HTTP/1.0 302 Redirect
Location: http://CorpWeb1.eng/travel.html
This type of HTTP response is known as a type 302 redirection response. This response informs client process 204 to resend the request received in step 302 using the resolved URL http://CorpWeb1.eng/travel.html. Typically, client process 204 will perform the resend automatically, without user intervention. In other cases, the type 302 redirection response can be modified to include HTML code that causes client process 204 to display a button or other icon. When pressed by the user, the button causes the application process to resend the request received in step 302 using the resolved URL http://CorpWeb1.eng/travel.html. In step 318, web page server 200 sends the response message formulated in step 316 to client process 204.

In general, it should be appreciated that the steps of method 300 may be performed by a specialized web page server, such as web page server 200. It is also possible, through the creation of appropriate add-in modules, to reconfigure existing web page servers to perform these same steps. In this way, method 300 has wide applicability to a large number of different systems and environments. It should also be noted that the steps of method 300 may be used in combination with other resource addressing schemes and is not limited to the use of URLs.

Other embodiments will be apparent to those skilled in the art from consideration of the specification and practice of the invention disclosed herein. It is intended that the specification and examples be considered as exemplary only, with a true scope of the invention being indicated by the following claims and equivalents.

## Claims

1. A method for resolving an abstract resource address, the method comprising the steps, performed by a computer system, of:
receiving an HTTP request from a client system, the HTTP request including an abstract resource address;
resolving the abstract resource address to a resolved resource address; and
sending an HTTP redirection response including the resolved resource address to the client system.

2. A method as recited in claim 1, wherein the abstract resource address and resolved resource address are URLs.

3. A method as recited in claim 1 further comprising the step of adding HTML code to the redirection response, the HTML code executable by the client system to present a user with the option to selectively perform the HTTP request using the resolved resource address.

4. A method as recited in claim 1, further comprising the step, performed by the computer system, of extracting information identifying the client system from the HTTP request.

5. A method as recited in claim 1, wherein the step of resolving the abstract resource address further comprises the step of selecting the resolved resource address from a resolved resource address table.

6. A method as recited in claim 3, wherein the step of selecting the resolved resource address from the resolved resource address table is performed using information identifying the client system.

7. A method as recited in claim 6, wherein the information identifying the client system is the IP address of the client system.

8. A method as recited in claim 6, wherein the information identifying the client system is the subnet address of the client system.

9. An apparatus for resolving an abstract resource address comprising:
a first portion configured to receive an HTTP request from a client system, the HTTP request including an abstract resource address;
a second portion configured to resolve the abstract resource address to a resolved resource address; and
a third portion configured to send an HTTP redirection response including the resolved resource address to the client system.

10. An apparatus as recited in claim 9, wherein the abstract resource address and resolved resource address are URLs.

11. An apparatus as recited in claim 9, wherein the third portion is configured to add HTML code to the redirection response, the HTML code executable by the client system to present a user with the option to selectively perform the HTTP request using the resolved resource address.

12. An apparatus as recited in claim 9, wherein the second portion is configured to extract information identifying the client system from the HTTP request.

13. An apparatus as recited in claim 9, wherein the second portion is configured to select the resolved resource address from a resolved resource address table.

14. An apparatus as recited in claim 9, wherein the second portion is configured to select the resolved resource address from the resolved resource address table using information identifying the client system.

15. An apparatus as recited in claim 14, wherein the information identifying the client system is the IP address of the client system.

16. An apparatus as recited in claim 14, wherein the information identifying the client system is the subnet address of the client system.

17. A computer program product including:
a computer usable medium having computer readable code embodied therein for resolving an abstract resource address for use in a computer system, the computer program product comprising:
a first portion including computer readable program code devices configured to cause a computer to receive an HTTP request from a client system, the HTTP request including an abstract resource address;
a second portion including computer readable program code devices configured to cause a computer to resolve the abstract resource address to a resolved resource address; and
a third portion including computer readable program code devices configured to cause a computer to send an HTTP redirection response including the resolved resource address to the client system.

18. computer program product as recited in claim 17, wherein the abstract resource address and resolved resource address are URLs.

19. A computer program product as recited in claim 17, wherein the second portion includes computer readable program code devices configured to cause a computer to select the resolved resource address from a resolved resource address table.

20. A computer program product as recited in claim 17, wherein the third portion includes computer readable program code devices configured to cause a computer to add HTML code to the redirection response, the HTML code executable by the client system to present a user with the option to selectively perform the HTTP request using the resolved resource address.

21. A computer program product as recited in claim 17, wherein the second portion includes computer readable program code devices configured to cause a computer to extract information identifying the client system from the HTTP request.

22. A computer program product as recited in claim 17, wherein the second portion includes computer readable program code devices configured to cause a computer to select the resolved resource address from the resolved resource address table using information identifying the client system.

23. A computer program product as recited in claim 22, wherein the information identifying the client system is the IP address of the client system.

24. A computer program product as recited in claim 22, wherein the information identifying the client system is the subnet address of the client system.

25. A computer data signal embodied in a carrier wave and representing sequences of instructions which, when executed by a computer, cause the computer to resolve an abstract resource address by performing the steps of:
executing a first portion configured to receive an HTTP request from a client system, the HTTP request including an abstract resource address;
executing a second portion configured to resolve the abstract resource address to a resolved resource address; and
executing a third portion configured to send an HTTP redirection response including the resolved resource address to the client system.

26. A computer data signal as recited in claim 25, wherein the abstract resource address and resolved resource address are URLs.

27. A computer data signal as recited in claim 25, wherein the third portion is configured to add HTML code to the redirection response, the HTML code executable by the client system to present a user with the option to selectively perform the HTTP request using the resolved resource address.

28. A computer data signal as recited in claim 25, wherein the second portion is configured to extract information identifying the client system from the HTTP request.

29. A computer data signal as recited in claim 25, wherein the second portion is configured to select the resolved resource address from a resolved resource address table.

30. A computer data signal as recited in claim 25, wherein the second portion is configured to select the resolved resource address from the resolved resource address table using information identifying the client system.

31. A computer data signal as recited in claim 30, wherein the information identifying the client system is the IP address of the client system.

32. A computer data signal as recited in claim 30, wherein the information identifying the client system is the subnet address of the client system.
